# EUROPÄISCHE PATENTSCHRIFT

(11) **EP 3 214 403 B1**
(45) Veröffentlichungstag und Bekanntmachung des Hinweises auf die Patenterteilung: **02.01.2019**
(21) Anmeldenummer: 17159172.0
(22) Anmeldetag: 03.03.2017
(51) Int. Cl.: G01C 15/00, F16M 11/04, F16M 13/02, B25B 5/10, B25B 5/06

(54) **HALTEVORRICHTUNG FÜR EIN LASERGERÄT**
RETAINING DEVICE FOR A LASER DEVICE
DISPOSITIF DE RETENUE POUR UN APPAREIL LASER

(30) Priorität: 04.03.2016 DE 202016101184 U
(43) Veröffentlichungstag der Anmeldung: 06.09.2017
(60) Teilanmeldung: 18158613.2
(73) Patentinhaber: UMAREX GmbH & Co. KG, 59757 Arnsberg (DE)
(72) Erfinder: Wonisch, Martin, 59755 Arnsberg (DE); Pflaumer, Eyck, 59755 Arnsberg (DE)
(74) Vertreter: Basfeld, Rainer

(56) Entgegenhaltungen:
- EP-A2- 1 939 587
- CN-U- 201 885 711
- US-A1- 2008 023 607
- US-B1- 6 398 175
- US-B1- 8 602 662

## Beschreibung

Die vorliegende Erfindung betrifft eine Haltevorrichtung für ein Lasergerät gemäß dem Anspruch 1 sowie ein Lasergerät mit einer derartigen Haltevorrichtung.

Lasergeräte für die Erzeugung mehrerer Laserlinien, die zur Nivellierung oder Markierung im Baubereich eingesetzt werden können, sind bekannt. Die Laserstrahlungen dieser Lasergeräte dienen dazu, Referenzlinien auf Wände, Böden oder Decken zu übertragen. Dabei können die Lasergeräte beispielsweise im Rohbau an temporären horizontalen oder vertikalen Streben oder an Trockenbaustreben angebracht werden. Auch die Anbringung an Rohren oder anderen baulichen Strukturen ist möglich.

Eine Haltevorrichtung der eingangs genannten Art ist aus der EP 1 939 587 A2 bekannt. Die darin beschriebene Haltevorrichtung umfasst ein erstes Teil, das mit einem Lasergerät verbindbar ist, und ein zweites Teil, das mit Haltemitteln für die Anbringung beispielsweise an einem Rohr oder einer Strebe versehen ist. Die Haltemittel weisen zwei zueinander bewegbare Klemmteile auf, die gegen die Kraft einer Feder relativ zueinander verschwenkbar sind und zwischen sich das Rohr oder die Strebe aufnehmen können.

Ein vergleichbarer Stand der Technik ist aus der CN 201 885 711 U bekannt. Auch bei der darin beschriebenen Haltevorrichtung ist ein erstes Teil mit einem Lasergerät verbindbar, wohingegen ein zweites Teil mit zwei zueinander bewegbaren Klemmteilen versehen ist, die gegen die Kraft einer Feder relativ zueinander verschwenkbar sind und zwischen sich ein Rohr oder eine Strebe aufnehmen können. Aus der EP 1 939 586 A2 ist eine weitere Haltevorrichtung für ein Lasergerät bekannt. Die darin beschriebenen Haltemittel sind als Klammer ausgebildet, die eine bauliche Struktur teilweise umgreifen können. Als nachteilig dabei erweist es sich, dass weder eine Anpassung an die Größe einer zu umgreifenden Struktur vorgenommen werden kann, noch dass die Orientierung der Klammer relativ zu dem Lasergerät verändert werden kann.

Das der vorliegenden Erfindung zugrundeliegende Problem ist die Schaffung einer Haltevorrichtung der eingangs genannten Art, die flexibler an bauliche Gegebenheiten anpassbar ist. Weiterhin soll ein Lasergerät mit einer derartigen Haltevorrichtung angegeben werden.

Dies wird erfindungsgemäß durch eine Haltevorrichtung der eingangs genannten Art mit den kennzeichnenden Merkmalen des Anspruchs 1 sowie durch ein Lasergerät der eingangs genannten Art mit den kennzeichnenden Merkmalen des Anspruchs 14 erreicht. Die Unteransprüche betreffen bevorzugte Ausgestaltungen der Erfindung.

Gemäß Anspruch 1 ist vorgesehen, dass die Haltemittel Einstellmittel umfassen, mit denen der Abstand zwischen den Klemmabschnitten der Klemmteile verändert werden kann, so dass eine Anpassung an die Abmessungen der zu klemmenden Struktur vorgenommen werden kann, wobei die Einstellmittel derart gestaltet sind, dass die beiden Klemmteile bei der Veränderung des Abstandes eine lineare Relativbewegung in einer Richtung ausführen, in der die Klemmabschnitte einander gegenüberliegen. Auf diese Weise kann der Benutzer vor Ort eine Anpassung des Abstands der Klemmabschnitte an die Größe beispielsweise der zu klemmenden Horizontal- oder Vertikalstreben vornehmen. Durch die Verschwenkbarkeit der beiden Klemmteile können unterschiedlich geformte bauliche Strukturen von den Haltemitteln gegriffen werden.

Es kann vorgesehen sein, dass die Einstellmittel eine Handhabe umfassen, durch deren Betätigung der Abstand zwischen den Klemmabschnitten der Klemmteile verändert werden kann. Beispielsweise können die Einstellmittel eine Gewindestange umfassen, die insbesondere so mit der Handhabe verbunden ist, dass durch Betätigung der Handhabe die Gewindestange gedreht wird. Insbesondere können dabei die Einstellmittel ein Innengewinde aufweisen, in dass die Gewindestange eingreifen kann, wobei die Gewindestange an einem der beiden Klemmteile und das Innengewinde an dem anderen der beiden Klemmteile angeordnet ist, so dass durch Drehung der Gewindestange, insbesondere aufgrund der Betätigung der Handhabe, der Abstand zwischen den Klemmabschnitten der Klemmteile verändert wird. Somit kann der Benutzer durch eine einfache Drehbewegung den Abstand an die Dimension der zu klemmenden Struktur anpassen.

Es kann vorgesehen sein, dass die Haltevorrichtung ein erstes Teil, das mit dem Lasergerät verbindbar ist oder Teil des Lasergeräts ist, und ein zweites Teil umfasst, an dem die Haltemittel angebracht oder angeordnet sind, wobei das zweite Teil in einer ersten Stellung und in einer zweiten Stellung an dem ersten Teil angebracht werden kann. Beispielsweise kann sich dabei die Orientierung des zweiten Teils in der ersten Stellung um einen Winkel von 90° von der Orientierung des zweiten Teils in der zweiten Stellung unterscheidet. Dadurch können beispielsweise in der ersten Stellung die Haltemittel optimal für die Anbringung an einer vertikalen Struktur wie beispielsweise einer vertikalen Trockenbaustrebe und in der zweiten Stellung für die Anbringung an einer horizontalen Struktur wie beispielsweise einer horizontalen Trockenbaustrebe geeignet sein. Durch die erfindungsgemäße Gestaltung kann der Benutzer somit die Haltevorrichtung flexibel an den vorhandenen baulichen Strukturen anbringen, so dass das Lasergerät eine Laserlinie der gewünschten Ausrichtung erzeugen kann.

Es kann vorgesehen sein, dass das erste Teil eine erste Fläche und das zweite Teil eine zweite Fläche aufweisen, wobei die erste und die zweite Fläche bei an dem ersten Teil angebrachtem zweitem Teil zumindest abschnittsweise aneinander anliegen. Dabei können das erste und das zweite Teil durch Magnetkräfte aneinander angebracht werden. Insbesondere sind dabei die erste Fläche und/oder die zweite Fläche zumindest abschnittsweise magnetisch und/oder magnetisierbar sind. Auf diese Weise können die beiden Flächen einfach miteinander verbunden und voneinander gelöst werden.

Es besteht die Möglichkeit, dass die Haltevorrichtung Positioniermittel umfasst, die an dem ersten und/oder an dem zweiten Teil vorgesehen sind. Insbesondere sind dabei die Positioniermittel derart gestaltet, dass die beiden Teile in der ersten und in der zweiten Stellung fester miteinander verbunden sind als in Stellungen, die weder der ersten noch der zweiten Stellung entsprechen. Dadurch sind zwei bevorzugte Orientierungen gegeben, die insbesondere einen rechten Winkel miteinander einschließen können, wie dies auch bei den in der Regel im Baubereich vorkommenden Strukturen wie horizontalen und vertikalen Streben der Fall ist.

Es kann vorgesehen sein, dass die Positioniermittel einen an der ersten und/oder an der zweiten Fläche angeordneten Rand aufweisen, der von dem jeweiligen Teil wegragt, insbesondere einen zumindest teilweise um die jeweilige Fläche umlaufenden Rand. Dabei können die Positioniermittel mindestens eine Anlagekante aufweisen, die an der ersten und/oder an der zweiten Fläche angeordnet ist und an dem Rand der anderen Fläche beziehungsweise der jeweils anderen Fläche anliegen kann. Weiterhin können die Positioniermittel mindestens eine Aufnahme oder Aussparung aufweisen, die an der ersten und/oder an der zweiten Fläche angeordnet ist und in die der Rand der anderen Fläche beziehungsweise der jeweils anderen Fläche eingreifen kann. Auf diese Weise können mit einfachen Mitteln zwei bevorzugte Orientierungen zwischen der ersten und der zweiten Fläche geschaffen werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Explosionsansicht einer erfindungsgemäßen Haltevorrichtung;
- Fig. 2: eine Seitenansicht der Haltevorrichtung gemäß Fig. 1;
- Fig. 3: eine Ansicht gemäß dem Pfeil III in Fig. 2;
- Fig. 4: eine Seitenansicht des ersten Teils der Haltevorrichtung gemäß Fig. 1;
- Fig. 5: eine Ansicht gemäß dem Pfeil V in Fig. 4;
- Fig. 6: eine Ansicht gemäß dem Pfeil VI in Fig. 4;
- Fig. 7: ein Detail aus Fig. 1, das das zweite Teil der Haltevorrichtung gemäß Fig. 1 zeigt;

In den Figuren sind gleiche oder funktional gleiche Teile mit gleichen Bezugszeichen versehen.

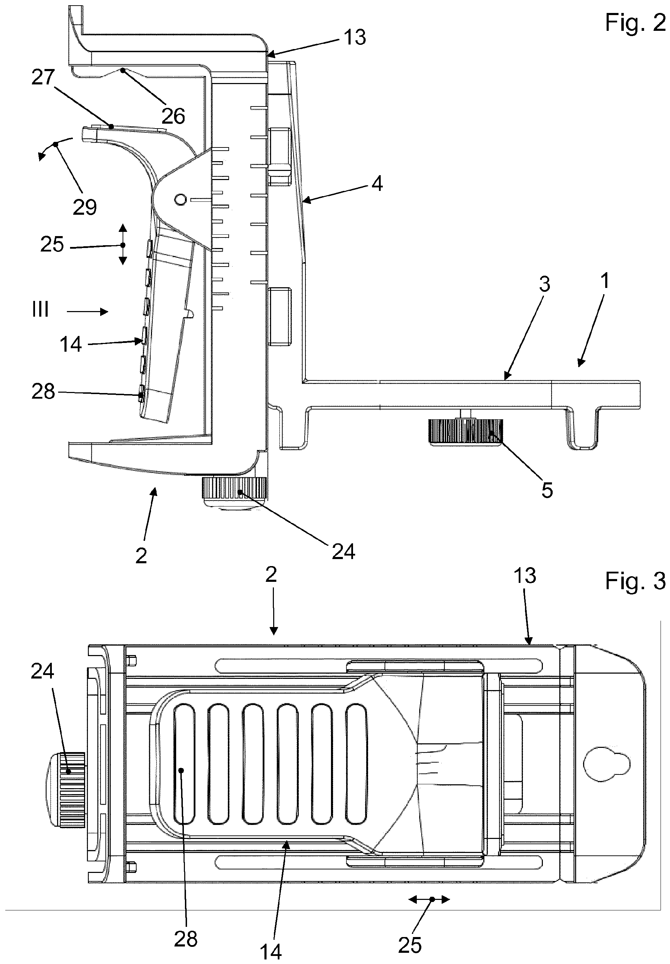

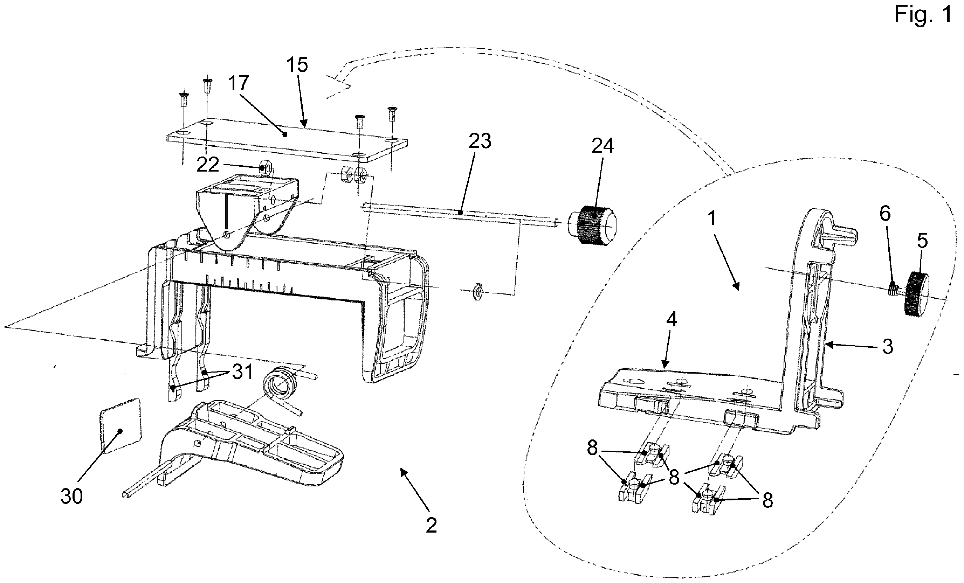

Aus Fig. 1 ist ersichtlich, dass die abgebildete Ausführungsform einer erfindungsgemäßen Haltevorrichtung ein erstes Teil 1 und ein zweites Teil 2 umfasst. Die beiden Teile 1, 2 können in zwei unterschiedlichen Stellungen miteinander verbunden werden. Fig. 2 und Fig. 3 zeigen die erste Stellung der beiden miteinander verbundenen Teile 1, 2.

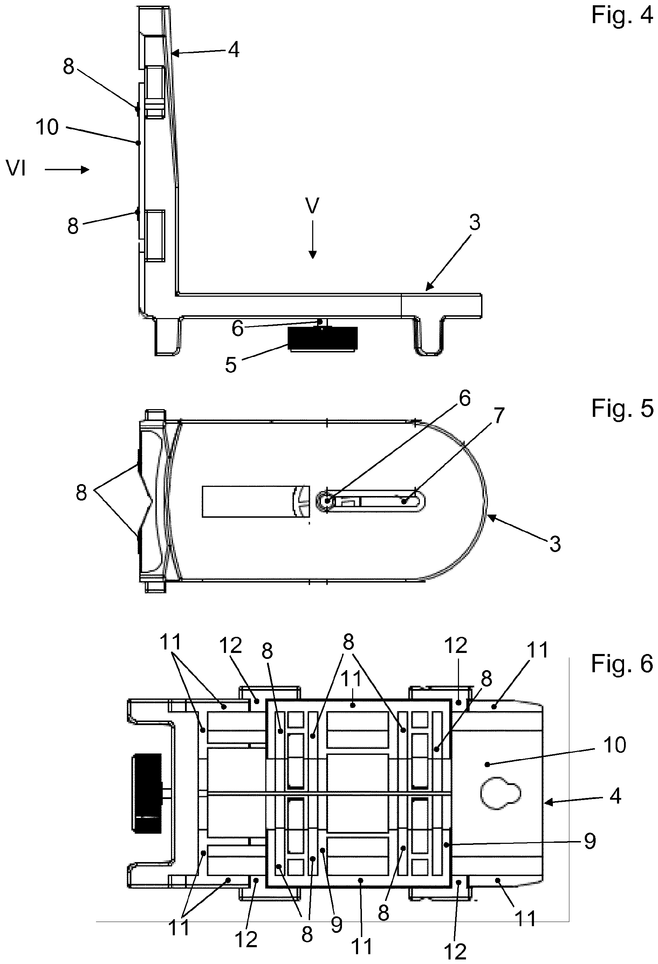

Das erste Teil 1 ist L-förmig ausgestaltet und weist im Wesentlichen einen ersten L-Schenkel 3 und einen zweiten L-Schenkel 4 auf. Ein nicht abgebildetes Lasergerät kann anliegend an beiden L-Schenkel 3, 4 montiert werden. Dazu ist an dem ersten L-Schenkel 3 eine mit einem von dem Benutzer leicht greifbaren Kopf 5 versehene Schraube 6 angebracht, die sich durch den ersten L-Schenkel 3 hindurch erstreckt und beispielsweise in eine entsprechende Gewindebohrung an dem Lasergerät eingeschraubt werden kann. Die Schraube 6 erstreckt sich dabei durch ein Langloch 7 des ersten L-Schenkels 3, so dass die Schraube 6 relativ zu dem Lasergerät positioniert werden kann (siehe Fig. 5).

Auf der von dem ersten L-Schenkel 3 abgewandten Seite des zweiten L-Schenkels 4 sind eine Mehrzahl von Magneten 8 angeordnet. Die Magnete 8 sind beabstandet zueinander angeordnet und flächenbündig in sie umgebende Abschnitte 9 einer ersten Fläche 10 eingefügt (siehe Fig. 4 und Fig. 6).

Zusätzlich zu den die Magnete 8 umgebenden Abschnitten 9 weist die erste Fläche 10 mehrere unterbrochene Anlagekanten 11 auf, die an den beiden gegenüberliegenden Längsseiten beziehungsweise den in Fig. 6 oben und unten angeordneten Seiten des zweiten L-Schenkels 4 angeordnet sind. Zwischen den an einer der Längsseiten angeordneten Anlagekanten 11 sind jeweils Aussparungen 12 vorgesehen.

Die nach links in Fig. 4 und Fig. 5 gerichteten beziehungsweise von dem ersten L-Schenkel 3 abgewandten Seiten der Magnete 8, der die Magnete 8 umgebenden Abschnitte 9 und der Anlagekanten 11 liegen zumindest teilweise in einer Ebene. Diese Ebene der ersten Fläche 10 bildet eine unterbrochene Anlagefläche für die Anlage einer im nachfolgenden noch detailliert beschriebenen zweite Fläche 17, die an dem zweiten Teil 2 ausgebildet ist.

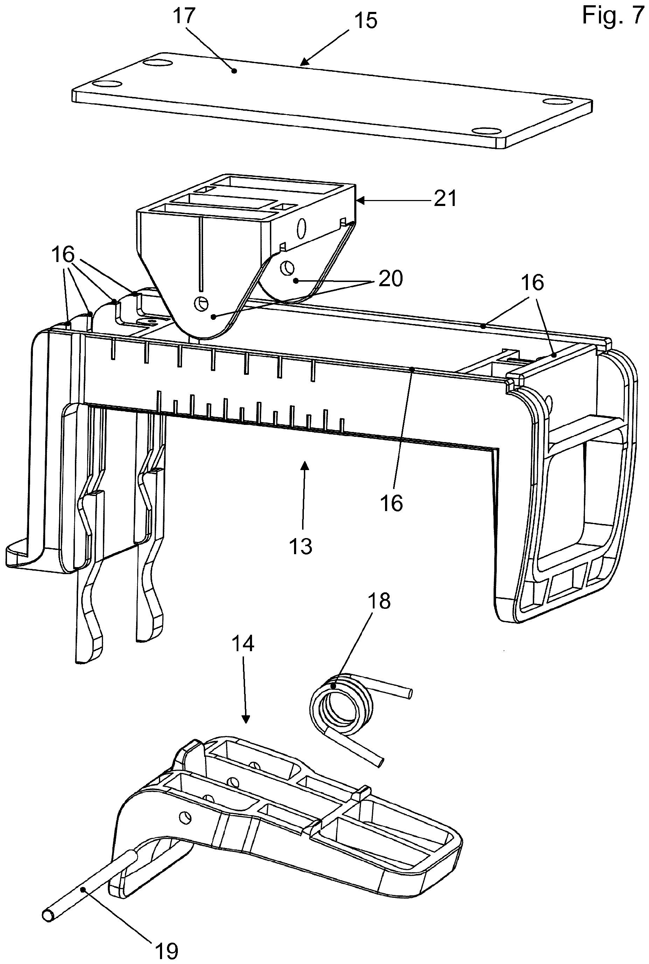

Das zweite Teil 2 weist ein im Wesentlichen U-förmiges erstes Klemmteil 13 und ein relativ zu diesem bewegbares zweites Klemmteil 14 auf (siehe Fig. 7). Auf der von dem zweiten Klemmteil 14 abgewandten Seite des ersten Klemmteils 13 ist eine Platte 15 aus einem magnetisierbaren Metall angebracht. Die in Fig. 7 obere Fläche dieser Platte entspricht der erwähnten zweiten Fläche 17 und dient als Anlagefläche für die Magnete 8, die Abschnitte 9 und die Anlagekanten 11 der ersten Fläche 10.

Die Platte 15 ist im montierten Zustand von einem fast vollständig umlaufenden Rand 16 umgeben, der die zweite Fläche 17 nach oben in Fig. 7 oder in Richtung auf das erste Teil 1 überragt. Die Magnete 8 liegen im verbundenen Zustand der beiden Teile 1, 2 an der zweiten Fläche 17 der magnetisierbaren Platte 15 an und befestigen damit die beiden Teile 1, 2 durch eine Magnetkraft aneinander.

Wenn die beiden Teile 1, 2 in der ersten Stellung, die in Fig. 2 und Fig. 3 abgebildet ist, aneinander angebracht sind, sind die Längsseiten des zweiten L-Schenkels 4 und des ersten Klemmteils 13 beziehungsweise der Platte 15 parallel zueinander (siehe Fig. 2). Dabei liegen die an den Längsseiten der Platte 15 beziehungsweise der zweiten Fläche 17 angeordneten Abschnitte des Randes 16 von außen an den Anlagekanten 11 der ersten Fläche 10 an.

Auf diese Weise wird die Verbindung zwischen den beiden Flächen 10, 17 stabilisiert. Insbesondere kann das zweite Teil 2 nicht in Querrichtung beziehungsweise nicht in die Zeichenebene der Fig. 2 hinein oder aus dieser heraus relativ zu dem ersten Teil 1 verschoben werden. Der umlaufende Rand 16 und die Anlagekanten 11 wirken somit als Positioniermittel, die die Orientierung des zweiten Teils 2 relativ zu dem ersten Teil 1 vorgeben.

Durch die vorgenannten Positioniermittel und insbesondere durch die Aussparungen 12 wird jedoch noch eine andere Orientierung der beiden Teile 1, 2 zueinander ermöglicht, die der nicht abgebildeten zweiten Stellung entspricht. Es zeigt sind, dass die jeweils in Querrichtung beziehungsweise oben und unten in Fig. 6 einander gegenüberliegenden Aussparungen 12 miteinander fluchten und eine unterbrochene Nut oder Aufnahme bilden, in die Abschnitte des Randes 16 eingreifen können. Insbesondere entspricht dabei der Abstand zwischen den Aussparungen 12 in Längsrichtung der ersten Fläche 10 beziehungsweise in der Richtungen von links nach rechts in Fig. 6 genau dem Abstand der Abschnitte des Randes 16 in Querrichtung der zweiten Fläche 17.

Es besteht also die Möglichkeit, das erste und das zweite Teil 1, 2 in einer um 90° gedrehten zweiten Stellung miteinander zu verbinden, in der beispielsweise der zweite L-Schenkel 4 des ersten Teils 1 aus der Zeichenebene der Fig. 2 herausragt. Der umlaufende Rand 16 und die Aussparungen 12 wirken somit in der zweiten Stellung als Positioniermittel, die die dabei vorliegende Orientierung des zweiten Teils 2 relativ zu dem ersten Teil 1 vorgeben.

Das zweite Klemmteil 14 ist relativ zu dem ersten Klemmteil 13 gegen die Federkraft einer Feder 18 verschwenkbar (siehe Fig. 7). Das zweite Klemmteil 14 ist um eine Achse 19 verschwenkbar, die in zwei Lagerböcken 20 gelagert ist. Die Lagerböcke 20 sind an einem beweglichen Teil 21 angeformt (siehe Fig. 7 und Fig. 1), an dem auch eine Mutter 22 mit einem Innengewinde angeordnet ist (siehe Fig. 1).

In das Innengewinde der Mutter 22 greift eine Gewindestange 23 ein, die nach außen aus dem ersten Klemmteil 13 herausgeführt ist. An dem herausgeführten Ende ist eine Handhabe 24 angebracht, mithilfe derer ein Benutzer die Gewindestange 23 drehen kann (siehe Fig. 1, Fig. 2 und Fig. 3). Durch Drehung der Handhabe 24 beziehungsweise der Gewindestange 23 wird somit das bewegliche Teil 21 linear längs der Gewindestange 23 beziehungsweise längs der Pfeile 25 in Fig. 2 und Fig. 3 relativ zu dem ersten Klemmteil 13 bewegt. Zusammen mit dem beweglichen Teil 21 wird dabei auch das daran schwenkbar gelagerte zweite Klemmteil 14 relativ zu dem ersten Klemmteil 13 bewegt.

Sowohl das erste Klemmteil 13 als auch das zweite Klemmteil 14 weisen jeweils einen Klemmabschnitt 26, 27 auf (siehe Fig. 2). Die Klemmabschnitte 26, 27 können eine nicht abgebildete bauseitige Struktur wie beispielsweise eine Strebe oder ein Rohr zwischen sich aufnehmen. An dem Klemmabschnitt 26 sind zwei Gummilippen 31 und an dem Klemmabschnitt 27 eine Gummiplatte 30 angeordnet (siehe Fig. 1), die zusammen zu einem sicheren Klemmen der bauseitigen Struktur beitragen.

Dabei wird für das Einbringen der beispielsweise als Rohr ausgebildeten Struktur auf das Fußende 28 des zweiten Klemmteils 14 (siehe Fig. 2 und Fig. 3) gedrückt, wodurch der Klemmabschnitt 27 des zweiten Klemmteils 14 längs des Pfeils 29 in Fig. 2 ein wenig von dem Klemmabschnitt 26 des ersten Klemmteils 13 entfernt wird, so dass das Rohr zwischen die beiden Klemmabschnitte 26, 27 eingebracht werden kann. Nach dem Einbringen des Rohres wird das Fußende 28 des zweiten Klemmteils 14 wieder losgelassen, so dass das zweite Klemmteil 14 von der Kraft der Feder 18 mit seinem Klemmabschnitt 27 an das Rohr angedrückt wird.

Wenn der Abstand zwischen den Klemmabschnitten 26, 27 für die Struktur, an der die Haltevorrichtung befestigt werden soll, zu groß oder zu klein ist, kann der Abstand durch das Drehen der Handhabe 24 beziehungsweise der Gewindestange 23 und die lineare Bewegung des zweiten Klemmteils 14 relativ zu dem ersten Klemmteil 13 angepasst werden.

## Patentansprüche

1. Haltevorrichtung für ein Lasergerät, umfassend Haltemittel, die an einer bauseits vorgegebenen Struktur, wie beispielsweise einem Rohr oder einer Strebe, befestigt werden können, so dass damit das Lasergerät an der bauseits vorgegebenen Struktur montiert werden kann, wobei die Haltemittel als Klemmeinrichtung ausgebildet sind und zwei zueinander bewegbare Klemmteile (13, 14) umfassen, die jeweils einen Klemmabschnitt (26, 27) aufweisen, zwischen denen ein Abschnitt der bauseits vorgegebenen Struktur geklemmt werden kann, wobei ein erstes der beiden Klemmteile (13, 14) relativ zu dem zweiten der beiden Klemmteile (13, 14) gegen die Federkraft einer Feder (18) verschewenkt werden kann, **dadurch gekennzeichnet, dass** die Haltemittel Einstellmittel umfassen, mit denen der Abstand zwischen den Klemmabschnitten (26, 27) der Klemmteile (13, 14) verändert werden kann, so dass eine Anpassung an die Abmessungen der zu klemmenden Struktur vorgenommen werden kann, wobei die Einstellmittel derart gestaltet sind, dass die beiden Klemmteile (13, 14) bei der Veränderung des Abstandes eine lineare Relativbewegung in einer Richtung ausführen, in der die Klemmabschnitte (26, 27) einander gegenüberliegen.

2. Haltevorrichtung nach Anspruch 1, **dadurch gekennzeichnet, dass** die Einstellmittel eine Handhabe (24) umfassen, durch deren Betätigung der Abstand zwischen den Klemmabschnitten (26, 27) der Klemmteile (13, 14) verändert werden kann.

3. Haltevorrichtung nach einem der Ansprüche 1 oder 2, **dadurch gekennzeichnet, dass** die Einstellmittel eine Gewindestange (23) umfassen, die insbesondere so mit der Handhabe (24) verbunden ist, dass durch Betätigung der Handhabe (24) die Gewindestange (23) gedreht wird.

4. Haltevorrichtung nach Anspruch 3, **dadurch gekennzeichnet, dass** die Einstellmittel ein Innengewinde aufweisen, in dass die Gewindestange (23) eingreifen kann, wobei die Gewindestange (23) an einem der beiden Klemmteile (13, 14) und das Innengewinde an dem anderen der beiden Klemmteile (13, 14) angeordnet ist, so dass durch Drehung der Gewindestange (23), insbesondere aufgrund der Betätigung der Handhabe (24), der Abstand zwischen den Klemmabschnitten (26, 27) der Klemmteile (13, 14) verändert wird.

5. Haltevorrichtung nach einem der Ansprüche 1 bis 4, **dadurch gekennzeichnet, dass** die Haltemittel Lagerböcke (20) aufweisen, an denen eines der beiden Klemmteile (13, 14) schwenkbar gelagert ist, wobei die Lagerböcke (20) insbesondere während der Veränderung des Abstands der Klemmabschnitte (26, 27) an dem anderen der beiden Klemmteile (13, 14) geführt werden, wobei die Lagerböcke (20) insbesondere an einem beweglichen Teil (21) angeordnet sind, an dem auch das Innengewinde angeordnet ist.

6. Haltevorrichtung nach einem der Ansprüche 1 bis 5, **dadurch gekennzeichnet, dass** die Haltemittel an einem mit dem Lasergerät verbindbaren Teil oder an dem Lasergerät angeordnet sind und/oder dass die Klemmteile (13, 14) an dem zweiten Teil (2) der Haltevorrichtung angeordnet sind.

7. Haltevorrichtung für ein Lasergerät nach einem der Ansprüche 1 bis 6, **dadurch gekennzeichnet, dass** die Haltevorrichtung ein erstes Teil (1), das mit dem Lasergerät verbindbar ist oder Teil des Lasergeräts ist, und ein zweites Teil (2) umfasst, an dem die Haltemittel angebracht oder angeordnet sind, wobei das zweite Teil (2) in einer ersten Stellung und in einer zweiten Stellung an dem ersten Teil (1) angebracht werden kann.

8. Haltevorrichtung nach Anspruch 7, **dadurch gekennzeichnet, dass** die Orientierung des zweiten Teils (2) in der ersten Stellung sich um einen Winkel von 90° von der Orientierung des zweiten Teils (2) in der zweiten Stellung unterscheidet.

9. Haltevorrichtung nach einem der Ansprüche 7 oder 8, **dadurch gekennzeichnet, dass** das erste Teil (1) eine erste Fläche (10) und das zweite Teil (2) eine zweite Fläche (17) aufweisen, wobei die erste und die zweite Fläche (10, 17) bei an dem ersten Teil (1) angebrachten zweiten Teil (2) zumindest abschnittsweise aneinander anliegen.

10. Haltevorrichtung nach einem der Ansprüche 7 bis 9, **dadurch gekennzeichnet, dass** das erste und das zweite Teil (1, 2) durch Magnetkräfte aneinander angebracht werden können, insbesondere wobei die erste Fläche (1) und/oder die zweite Fläche (2) zumindest abschnittsweise magnetisch und/oder magnetisierbar sind.

11. Haltevorrichtung nach einem der Ansprüche 7 bis 10, **dadurch gekennzeichnet, dass** die Haltevorrichtung Positioniermittel umfasst, die an dem ersten und/oder an dem zweiten Teil (1, 2) vorgesehen sind und insbesondere derart gestaltet sind, dass die beiden Teile (1, 2) in der ersten und in der zweiten Stellung fester miteinander verbunden sind als in Stellungen, die weder der ersten noch der zweiten Stellung entsprechen.

12. Haltevorrichtung nach Anspruch 11, **dadurch gekennzeichnet, dass** die Positioniermittel einen an der ersten und/oder an der zweiten Fläche (1, 2) angeordneten Rand (16) aufweisen, der von dem jeweiligen Teil (1, 2) wegragt, insbesondere einen zumindest teilweise um die jeweilige Fläche (10, 17) umlaufenden Rand (16).

13. Haltevorrichtung nach Anspruch 12, **dadurch gekennzeichnet, dass** die Positioniermittel mindestens eine Anlagekante (11) aufweisen, die an der ersten und/oder an der zweiten Fläche (1, 2) angeordnet ist und an dem Rand (16) der anderen Fläche (1, 2) beziehungsweise der jeweils anderen Fläche (1, 2) anliegen kann und/oder dass die Positioniermittel mindestens eine Aufnahme oder Aussparung (12) aufweisen, die an der ersten und/oder an der zweiten Fläche (1, 2) angeordnet ist und in die der Rand (16) der anderen Fläche (1, 2) beziehungsweise der jeweils anderen Fläche (1, 2) eingreifen kann.

14. Lasergerät für die Erzeugung mindestens einer, vorzugsweise mehrerer Laserlinien, die zur Nivellierung oder Markierung im Baubereich eingesetzt werden können, umfassend eine Haltevorrichtung, **dadurch gekennzeichnet, dass** die Haltevorrichtung eine Haltevorrichtung nach einem der Ansprüche 1 bis 13 ist.

## Claims

1. Retention device for a laser device, comprising retention means which can be fixed to a structure which is predetermined at the construction side, such as, for example, a pipe or a strut, so that consequently the laser device can be mounted on the structure which is predetermined at the construction side, wherein the retention means are constructed as a clamping device and comprise two clamping components (13, 14) which can be moved relative to each other and which each have a clamping portion (26, 27), between which a portion of the structure which is predetermined at the construction side can be clamped, wherein a first of the two clamping components (13, 14) can be pivoted relative to the second of the two clamping components (13, 14) counter to the resilient force of a spring (18), **characterised in that** the retention means comprise adjustment means by means of which the spacing between the clamping portions (26, 27) of the clamping components (13, 14) can be changed so that an adaptation to the dimensions of the structure to be clamped can be carried out, wherein the adjustment means are constructed in such a manner that, when the spacing is changed, the two clamping components (13,14) carry out a linear relative movement in a direction in which the clamping portions (26, 27) are opposite each other.

2. Retention device according to claim 1, **characterised in that** the adjustment means comprise a handle (24) by means of the actuation of which the spacing between the clamping portions (26, 27) of the clamping components (13, 14) can be changed.

3. Retention device according to any of claims 1 or 2, **characterised in that** the adjustment means comprise a threaded rod (23) which is connected to the handle (24) in particular in such a manner that by actuating the handle (24) the threaded rod (23) is rotated.

4. Retention device according to claim 3, **characterised in that** the adjustment means have an inner thread in which the threaded rod (23) can engage, wherein the threaded rod (23) is arranged on one of the two clamping components (13, 14) and the inner thread on the other of the two clamping components (13, 14) so that by rotating the threaded rod (23), in particular as a result of the actuation of the handle (24), the spacing between the clamping portions (26, 27) of the clamping components (13, 14) is changed.

5. Retention device according to any of claims 1 to 4, **characterised in that** the retention means have bearing blocks (20) on which one of the two clamping components (13, 14) is pivotably supported, wherein the bearing blocks (20), in particular during changing of the spacing of the clamping portions (26, 27), are guided on the other of the two clamping components (13, 14), wherein the bearing blocks (20) are arranged in particular on a movable component (21) on which the inner thread is also arranged.

6. Retention device according to any of claims 1 to 5, **characterised in that** the retention means are arranged on a component which can be connected to the laser device or on the laser device and/or **in that** the clamping components (13, 14) are arranged on the second component (2) of the retention device.

7. Retention device for a laser device according to any of claims 1 to 6, **characterised in that** the retention device is a first component (1) which can be connected to the laser device or is part of the laser device, and comprises a second component (2) on which the retention means are fitted or arranged, wherein the second component (2) can be fitted in a first position and in a second position on the first component (1).

8. Retention device according to claim 7, **characterised in that** the orientation of the second component (2) in the first position differs by an angle of 90° from the orientation of the second component (2) in the second position.

9. Retention device according to any of claims 7 or 8, **characterised in that** the first component (1) has a first face (10) and the second component (2) has a second face (17), wherein the first face and the second face (10, 17) are at least partially in abutment when the second component (2) is fitted to the first component (1).

10. Retention device according to any of claims 7 to 9, **characterised in that** the first and the second component (1, 2) can be fitted to each other by means of magnetic forces, in particular wherein the first face (1) and/or the second face (2) is/are at least partially magnetic and/or magnetisable.

11. Retention device according to any of claims 7 to 10, **characterised in that** the retention device comprises positioning means which are provided on the first and/or on the second component (1, 2) and are in particular constructed in such a manner that the two components (1, 2) are more securely connected to each other in the first and second positions than in positions which correspond to neither the first nor the second position.

12. Retention device according to claim 11, **characterised in that** the positioning means have an edge (16) which is arranged on the first and/or on the second face (1, 2) and which protrudes away from the respective component (1, 2), in particular an edge (16) which extends at least partially around the respective face (10, 17).

13. Retention device according to claim 12, **characterised in that** the positioning means have at least one abutment edge (11) which is arranged on the first and/or on the second face (1, 2) and which can abut the edge (16) of the other face (1, 2) or the respective other face (1, 2), and/or **in that** the positioning means have at least one receiving member or recess (12) which is arranged on the first and/or on the second face (1, 2) and in which the edge (16) of the other face (1, 2) or the respective other face (1, 2) can engage.

14. Laser device for producing at least one, preferably several, laser lines which can be used for levelling or marking in the construction field, comprising a retention device, **characterised in that** the retention device is a retention device according to any of claims 1 to 13.

## Revendications

1. Dispositif de maintien pour un appareil laser, comprenant des moyens de maintien, qui peuvent être fixés à une structure prédéfinie côté construction, telle que par exemple un tuyau ou une entretoise, de sorte qu'ainsi l'appareil laser puisse être monté au niveau de la structure prédéfinie côté construction, dans lequel les moyens de maintien sont réalisés en tant que système de serrage et comprennent deux parties de serrage (13, 14) pouvant être déplacées l'une par rapport à l'autre, qui présentent respectivement une section de serrage (26, 27), entre lesquelles une section de la structure prédéfinie côté construction peut être serrée, dans lequel une première des deux parties de serrage (13, 14) peut être pivotée par rapport à la seconde des deux parties de serrage (13, 14) à l'encontre de la force de ressort d'un ressort (18), **caractérisé en ce que** les moyens de maintien comprennent des moyens de réglage, avec lesquels la distance entre les sections de serrage (26, 27) des parties de serrage (13, 14) peut être modifiée, de sorte qu'une adaptation aux dimensions de la structure à serrer puisse être effectuée, dans lequel les moyens de réglage sont configurés de telle manière que les deux parties de serrage (13, 14) exécutent, lors de la modification de la distance, un déplacement relatif linéaire dans une direction, dans laquelle les sections de serrage (26, 27) se font face l'une l'autre.

2. Dispositif de maintien selon la revendication 1, **caractérisé en ce que** les moyens de réglage comprennent une poignée (24), par l'actionnement de laquelle la distance entre les sections de serrage (26, 27) des parties de serrage (13, 14) peut être modifiée.

3. Dispositif de maintien selon l'une quelconque des revendications 1 ou 2, **caractérisé en ce que** les moyens de réglage comprennent une tige filetée (23), qui est reliée en particulier de telle sorte à la poignée (24) que, du fait de l'actionnement de la poignée (24), la tige filetée (23) est tournée.

4. Dispositif de maintien selon la revendication 3, **caractérisé en ce que** les moyens de réglage présentent un filetage intérieur, avec lequel la tige filetée (23) peut venir en prise, dans lequel la tige filetée (23) est disposée au niveau d'une des deux parties de serrage (13, 14) et le filetage intérieur est disposé au niveau de l'autre des deux parties de serrage (13, 14) de sorte que, du fait de la rotation de la tige filetée (23), en particulier à cause de l'actionnement de la poignée (24), la distance entre les deux sections de serrage (26, 27) des parties de serrage (13, 14) soit modifiée.

5. Dispositif de maintien selon l'une quelconque des revendications 1 à 4, **caractérisé en ce que** les moyens de maintien présentent des blocs de support (20), au niveau desquels une des deux parties de serrage (13, 14) est montée de manière à pouvoir pivoter, dans lequel les blocs de support (20) sont guidés en particulier pendant la modification de la distance des sections de serrage (26, 27) au niveau de l'autre des deux parties de serrage (13, 14), dans lequel les blocs de support (20) sont disposés en particulier au niveau d'une partie (21) mobile, au niveau de laquelle le filetage intérieur est disposé également.

6. Dispositif de maintien selon l'une quelconque des revendications 1 à 5, **caractérisé en ce que** les moyens de maintien sont disposés au niveau d'une partie pouvant être reliée à l'appareil laser ou au niveau de l'appareil laser, et/ou que les parties de serrage (13, 14) sont disposées au niveau de la seconde partie (2) du dispositif de maintien.

7. Dispositif de maintien pour un appareil laser selon l'une quelconque des revendications 1 à 6, **caractérisé en ce que** le dispositif de maintien comprend une première partie (1), qui peut être reliée à l'appareil laser ou qui fait partie de l'appareil laser, et une seconde partie (2), au niveau de laquelle les moyens de maintien sont installés ou disposés, dans lequel la seconde partie (2) peut être installée dans une première position et dans une deuxième position au niveau de la première partie (1).

8. Dispositif de maintien selon la revendication 7, **caractérisé en ce que** l'orientation de la seconde partie (2) dans la première position se distingue d'un angle de 90° de l'orientation de la seconde partie (2) dans la deuxième position.

9. Dispositif de maintien selon l'une quelconque des revendications 7 ou 8, **caractérisé en ce que** la première partie (1) présente une première surface (10) et la seconde partie (2), une deuxième surface (17), dans lequel la première et la deuxième surface (10, 17) reposent l'une au niveau de l'autre au moins par endroits lorsque la seconde partie (2) est installée au niveau de la première partie (1).

10. Dispositif de maintien selon l'une quelconque des revendications 7 à 9, **caractérisé en ce que** la première et la seconde partie (1, 2) peuvent être installées l'une au niveau de l'autre par des forces magnétiques, en particulier dans lequel la première surface (1) et/ou la deuxième surface (2) sont magnétiques et/ou peuvent être magnétisées au moins par endroits.

11. Dispositif de maintien selon l'une quelconque des revendications 7 à 10, **caractérisé en ce que** le dispositif de maintien comprend des moyens de positionnement, qui sont prévus au niveau de la première et/ou au niveau de la seconde partie (1, 2) et sont configurés en particulier de telle manière que les deux parties (1, 2) sont reliées l'une à l'autre dans la première et dans la deuxième position de manière plus solidaire que dans des positions qui ne correspondent ni à la première ni à la deuxième position

12. Dispositif de maintien selon la revendication 11, **caractérisé en ce que** les moyens de positionnement présentent un bord (16) disposé au niveau de la première et/ou au niveau de la seconde surface (1, 2), qui dépasse de la partie (1, 2) respective, en particulier un bord (16) situé en périphérie au moins en partie autour de la surface (10, 17) respective.

13. Dispositif de maintien selon la revendication 12, **caractérisé en ce que** les moyens de positionnement présentent au moins une arête d'appui (11), qui est disposée au niveau de la première et/ou au niveau de la seconde surface (1, 2) et peut reposer au niveau du bord (16) de l'autre surface (1, 2) ou de l'autre surface (1, 2) respectivement, et/ou que les moyens de positionnement présentent au moins un logement ou un évidement (12), qui est disposé au niveau de la première et/ou au niveau de la seconde surface (1, 2) et avec lequel le bord (16) de l'autre surface (1, 2) ou de l'autre surface (1, 2) respectivement peut venir en prise.

14. Appareil laser pour la génération d'au moins une, de préférence de plusieurs, lignes laser qui peuvent être utilisées pour la mise à niveau ou le marquage dans le secteur de la construction, comprenant un dispositif de maintien, **caractérisé en ce que** le dispositif de maintien est un dispositif de maintien selon l'une quelconque des revendications 1 à 13.
